# EUROPEAN PATENT SPECIFICATION

(11) **EP 0 730 314 B1**
(45) Date of publication and mention of the grant of the patent: **06.05.1999**
(21) Application number: 96301382.6
(22) Date of filing: 29.02.1996
(51) Int. Cl.: H01M 4/48, H01M 4/50, H01M 4/52, C01G 1/02, C01G 45/02

(54) **Method of producing cathode active material for non-aqueous electrolyte secondary battery**
Verfahren zur Herstellung eines aktiven Materials für Kathoden einer nichtwässrigen Sekundärzelle
Procédé de préparation d'une matière active pour la cathode d'un élément secondaire à électrolyte non-aqueux

(30) Priority: 03.03.1995 JP 44052/95
(43) Date of publication of application: 04.09.1996
(73) Proprietor: MATSUSHITA ELECTRIC INDUSTRIAL CO., LTD., Kadoma-shi, Osaka-fu, 571 (JP)
(72) Inventor: Nitta, Yoshiaki, Hirakata City, 573 (JP); Nagayama, Masatoshi, Neyagawa City, 572 (JP); Seo, Tomoaki, Neyagawa City, 572 (JP)
(74) Representative: Nachshen, Neil Jacob

(56) References cited:
- EP-A- 0 279 235
- EP-A- 0 624 552
- US-A- 5 266 299
- PATENT ABSTRACTS OF JAPAN vol. 016 no. 364 (E-1244) ,6 August 1992 & JP-A-04 115459 (MITSUBISHI ELECTRIC CORP) 16 April 1992,

## Description

### BACKGROUND OF THE INVENTION

### Field of the Invention

The present invention relates to a method of producing a cathode active material for a non-aqueous electrolyte secondary battery. The term "battery" used herein includes single cells as well as plural cell arrangements.

### Description of the Prior Art

As a cathode active material for a non-aqueous electrolyte secondary battery, composite oxides containing Li such as LiCoO₂, LiNiO₂, LiMnO₂, etc. are well known in the art.

Intensive research has been made into non-aqueous electrolyte secondary batteries with a combination of such a cathode active material and an anode active material, e.g., a carbon compound capable of intercalation and deintercalation of Li because it has a high voltage and a high energy density.

Conventionally, a cathode active material is produced by the methods as mentioned below. For example, a method of producing LiMnO₂ is known from a report in Chemistry Express, vol.7, pp. 193-196 (1992). This method obtains LiMnO₂ by baking a mixture of LiOH·H₂O and γ-MnOOH at 450°C in an atmosphere of nitrogen gas. To increase charge or discharge capacity of a cathode active material, homogeneity and high purity are required for the active material. In the use of this method, it is required to mix a LiOH·H₂O powder and a γ-MnOOH powder uniformly and at a stoichiometrically correct mixture rate even in extremely small microscopic local areas, before baking to enable uniform reaction. If the homogeneity of the mixture is not sufficient before baking, there is a possibility that undesirable materials are produced or raw starting materials remain. As a result, electrochemical activity of the active material obtained is reduced.

To solve these problems in using the powder raw materials, Japanese Unexamined Publication Tokkai Hei 6-349494 (hereinafter referred to as "'494") discloses a method of substituting Li ions for protons contained in γ-MnOOH by immersing a γ-MnOOH powder into an LiOH aqueous solution, followed by boiling the resultant suspension for a certain time and heating the wet powder obtained by removing supernatant liquid of the suspension in an atmosphere of argon gas. However, according to this method, the process of boiling the powder so as to react it and the process of heating the wet powder must be performed separately. Therefore, this method has a drawback that the process is complex and low in production efficiency.

When using an LiOH aqueous solution, because of limited solubility of LiOH, reaction rates of lithiation of γ-MnOOH are low.

### SUMMARY OF THE INVENTION

As hereinafter described in detail, the present invention can simplify the process of producing an active material derived from reaction between a hydroxide or an oxyhydroxide of a 3d transition metal such as γ-MnOOH and an alkali metal compound such as LiOH, and can provide a cathode active material having a uniform composition and a large capacity by improved efficiency of the reaction between the hydroxide or the oxyhydroxide of the 3d transition metal and the alkali metal compound.

The present invention provides a method of producing a cathode active material for a non-aqueous electrolyte secondary battery, comprising the step of exposing a hydroxide or an oxyhydroxide of a 3d transition metal containing protons at a rate of 1 wt% or more to a saturated aqueous mist containing a hydroxide of an alkali metal dissolved therein to substitute the alkali metal ions contained in said aqueous mist for said protons contained in said hydroxide or said oxyhydroxide.

The present invention further provides a method of producing a cathode active material for a non-aqueous electrolyte secondary battery, comprising the steps of;
preparing a mixture of an alkali metal hydroxide and at least one compound selected from hydroxides and oxyhydroxides of 3d transition metals, said compound containing protons at a rate of 1 wt% or more and
exposing said mixture to a saturated aqueous mist, to dissolve said alkali metal hydroxide in said saturated aqueous mist and to substitute the alkali metal ions contained in said saturated aqueous mist for said protons contained in said compound.

Thus, supply of saturated water vapor including a water mist containing alkali metal ions to a solid surface of a hydroxide or an oxyhydroxide of a 3d transition metal causes a buffer effect on a redox reaction which is a reaction which detaches protons exposed on the surface of the hydroxide or the oxyhydroxide. This causes the alkali metal ions contained in the water vapor continuously to compensate for the electric charge caused by the detachment of the protons.

When the alkali metal ions dissolved in the water mist dispersed in the water vapor are used for the reaction, the reaction rate is higher in comparison with an ordinary reaction in a solid-liquid system. It is assumed that this is because the alkali metal ions in the water mist have a higher degree of freedom of motion than in the liquid phase water, and that the alkali metal ions easily collide with the hydroxide or the oxyhydroxide (in comparison with a reaction in a solid-liquid system) and alkalinization of the hydroxide or the oxyhydroxide is promoted. Furthermore, because this reaction resembles the reaction in the solid-gas system, concentration polarization which is observed in a liquid at ordinary solid-liquid reaction is unlikely to occur.

It is preferable that the exposing step is performed under pressurized conditions. By performing the step under pressurized conditions, it becomes possible to realize a higher concentration of alkali metal ions in the water mist. When the boiling point is raised by pressurization, the solubility increases. For example, it is possible to raise the solubility of LiOH in water higher than 6 mol/L that is the saturation solubility of LiOH in water under normal pressure at 100°C.
Furthermore, by raising the boiling point, saturation humidity becomes surprisingly higher. If saturation humidity is well regulated, it is possible to control the frequency of collision of the alkali metal ions with the solid surface, and thus the reaction rate.

It is preferable that the alkali metal ions are Li ions.

The transition metal compound is preferably MnOOH.

It is preferable that the water mist contains the alkali metal ions at a concentration of more than 6 mol/L in liquid phase water.

Preferred embodiments of the present invention will now be described by way of example with reference to the drawings.

### BRIEF DESCRIPTION OF THE DRAWINGS

FIG. 1 shows a vertical cross-sectional view of an apparatus for producing a cathode active material in accordance with the present invention.

FIG. 2 shows an X-ray diffraction pattern of LiMnO₂ obtained by the method of a first embodiment in accordance with the present invention.

FIG. 3 shows an X-ray diffraction pattern of LiMnO₂ obtained by the method of a first comparative embodiment.

FIG. 4 shows an X-ray diffraction pattern of LiMnO₂ obtained by the method of a third comparative embodiment.

### DETAILED DESCRIPTION OF THE PREFERRED EMBODIMENTS

More specifically, the method using γ-MnOOH is explained as follows.

This is a method to obtain a cathode active material represented by a general formula of LiMnO₂. The method uses the buffer effect of the redox reaction which performs detachment of protons contained in γ-MnOOH and compensation of an electric charge caused by the detachment with Li ions contained in a water mist on the detached surface of the γ-MnOOH continuously by exposing γ-MnOOH to an atmosphere of saturated water vapor at a temperature over 100°C wherein a water mist containing Li ions originating from LiOH is dispersed.

Essentially, hydroxyl groups are exposed on a solid surface of a hydroxide or an oxyhydroxide. Therefore, depending on the environment of the solid, the solid causes the buffer effect of the redox reaction namely a detachment of protons or hydroxyl groups. If the environment has acidity, the solid detaches hydroxyl groups; and if the environment has alkalinity, the solid detaches protons. The present invention uses this characteristic of detachment of protons present on the solid surface by collision with a water mist containing alkali metal ions in a water vapor and compensation of an electric charge of the solid caused by the detachment of the protons with the alkali metal ions. When the water mist containing the alkali metal ions collides with the solid, the hydroxyl group in the water mist attacks the proton to incorporate it inside the water mist. Simultaneously, the solid takes up a stoichiometrically correct amount of the alkali metal ions. As a result, the alkali metal ions in the water mist substitute for the protons in the solid.

### [FIRST EMBODIMENT]

The method of producing a cathode active material is illustrated as follows. In this embodiment, the desired active material is LiMnO₂.

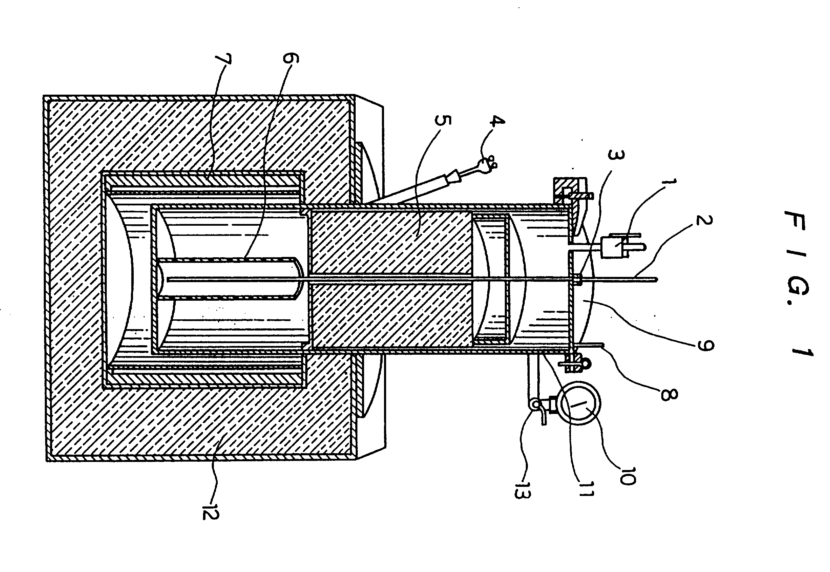

FIG. 1 shows a production apparatus used in this embodiment. A container 11 of stainless steel containing a ceramic heat insulator 5 is placed at a position where its bottom is a few cm up from the bottom of a cylindrical hollow space within a ceramic heat insulator 12. Water can be supplied through a pipe 2 into the container 11 from outside of the apparatus. A rubber stopper 3 seals the gap where the pipe 2 passes through a hole in a lid 9 of stainless steel. A pipe 6 for distribution of water vapor is placed in the container 11; it may be perforated if desired. During the reaction, the container 11 is closed airtightly by shutting the lid 9 with a knob 8. Numeral 1 denotes a valve for evacuating a gas within the container 11. A sample placed in the container 11 is heated by a kanthal heater 7. Temperature and pressure in the container 11 are measured by a thermocouple 4 and a pressure gauge 10, respectively. Numeral 13 denotes a valve for supplying a gas.

Previously, γ-MnOOH and LiOH pulverized to a powder having a particle diameter of under 100µm have been mixed at the correct molar ratio for producing LiMnO₂. The mixture is placed, with care to prevent contact with water, on a boat of alumina which is placed on a stand at a position about 2 cm up from the bottom of the container 11 and outside the pipe 6. This is effected by pulling out the pipe 2 with the lid 9, removing the insulator 5 from the container 11, placing the boat containing the mixture outside the pipe 6 in the container 11, adding about 10 cc of water to the container 11 avoiding the water touching with the mixture, replacing the insulator 5, and replacing the pipe 2 and the lid 9 so that an airtight seal is formed.

Then, the kanthal heater 7 is turned on to heat the inside of the container 11. The temperature and the pressure in the container 11 are monitored by the thermocouple 4 and the pressure gauge 10, respectively, and when the temperature reaches 100°C or therearound a supply of drops of water into the container 11 is started through the pipe 2.

When water vapor is saturated under normal pressure, saturation humidity is 17.05 [water vapor/dry air by weight]. Under this condition, the water vapor causes LiOH deliquescence and a water mist containing Li ions at a high concentration is generated around the γ-MnOOH at a high temperature, since the γ-MnOOH has been mixed with the LiOH. The reaction then starts, that is, substitution of the Li ions for the protons caused by the buffer effect of the redox reaction on the solid surface.

For accelerating the reaction, it is effective to raise the saturation humidity in the container 11 by heating, or to cover the surroundings of the mixture with a shield having openings through which the water mist can pass.

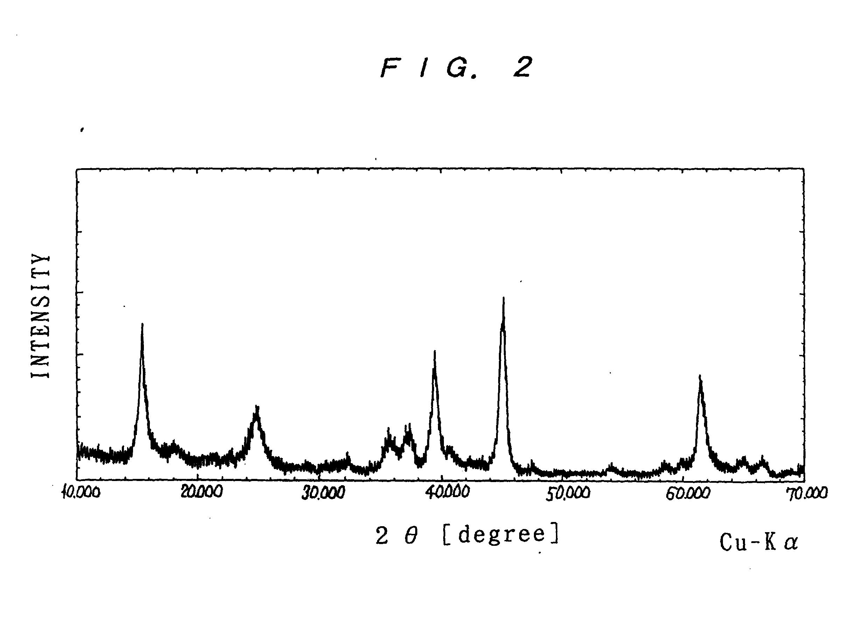

Under these conditions, the desired orthorhombic LiMnO₂ was obtained by treatment for 3 hours. A powder X-ray diffraction pattern for the material obtained is shown in FIG. 2. As shown in FIG. 2, the desired orthorhombic LiMnO₂ was obtained.

### [SECOND EMBODIMENT]

Using the same apparatus as in the above-mentioned embodiment, by performing the treatment at a temperature of 132°C under a pressure of 3.0 kgf/cm² (corresponding to a gauge pressure of 2.0 kgf/cm²), the desired orthorhombic LiMnO₂ was obtained in about 2 hours. The saturation humidity is 68.13. In this embodiment, the applied pressure was 3.0 kgf/cm², taking into consideration the durability of the apparatus. It is possible to perform the same treatment under further pressure with an increased humidity, if the durability of the apparatus permits.

In accordance with the present invention, other processes such as baking are not required and the procedure is completed with the above process alone.

Since an active material is produced in these methods, the content of protons inherently contained in the raw starting material is an extremely important factor. Therefore, a γ-MnOOH powder containing 1% by weight or more of protons was selected in the first and the second embodiments. If the amount of protons is extremely small, the manganese compound can not take up an efficient amount of Li ions. Since the reaction advances in accordance with the chemical equilibrium theory, it is considered that the reaction rate is lowered after the reaction has advanced to some extent. There occurs no problem if the treatment is performed under normal pressure or higher; however it is preferable to perform the process in a further pressurized environment.

Hereafter, the method of the present invention is explained in comparison with a conventional method.

### [FIRST COMPARATIVE EMBODIMENT]

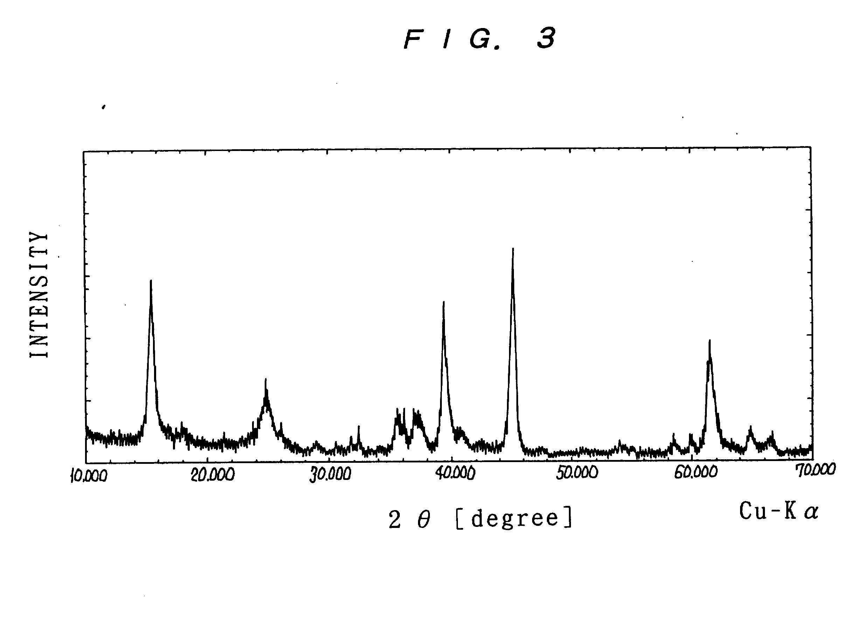

As a reference, LiMnO₂ was produced in a solid-liquid system in accordance with the method disclosed in '494. Firstly, γ-MnOOH is added to a saturated LiOH aqueous solution. The suspension thus obtained was boiled for six hours, and then centrifuged to obtain a wet powder. Then, the powder obtained was disposed on an alumina boat and heated at 200 °C in an atmosphere of argon gas to obtain the desired LiMnO₂. A powder X-ray diffraction pattern for the powder obtained is shown in FIG. 3. It is apparent from FIG. 3 that the diffraction pattern for the powder shows substantially the same pattern as that for the powder obtained in the first embodiment, suggesting that the powder of this embodiment also has the orthorhombic system. Furthermore, the powders obtained by both methods have an equivalent electrochemical activity.

With this method, a heat treatment is required after the step of reaction in the solid-liquid system wherein the Li ions are substituted for the hydroxyl groups in the γ-MnOOH. Consequently, a relatively long time period is required for producing an active material compared with the method of the present invention. Therefore the method of the present invention allows simplification of the process, thereby realizing a shorter processing time as a whole.

### [SECOND COMPARATIVE EMBODIMENT]

In the same way as the first comparative embodiment using the solid-liquid system, LiMnO₂ was produced under a pressure of 3 kgf/cm² (corresponding to a gauge pressure of 2 kgf/cm²). In this method, the powder must be boiled for 3 hours or longer to obtain a cathode active material equivalent to that of the present invention.

With this method, the reaction rate was higher than that in the first comparative embodiment, but lower than that in the first embodiment of the present invention. This may be because the reaction is restricted by concentration polarization which occurs in the solution.

In addition, heat treatment is required after the solid-liquid reaction.

### [THIRD COMPARATIVE EMBODIMENT]

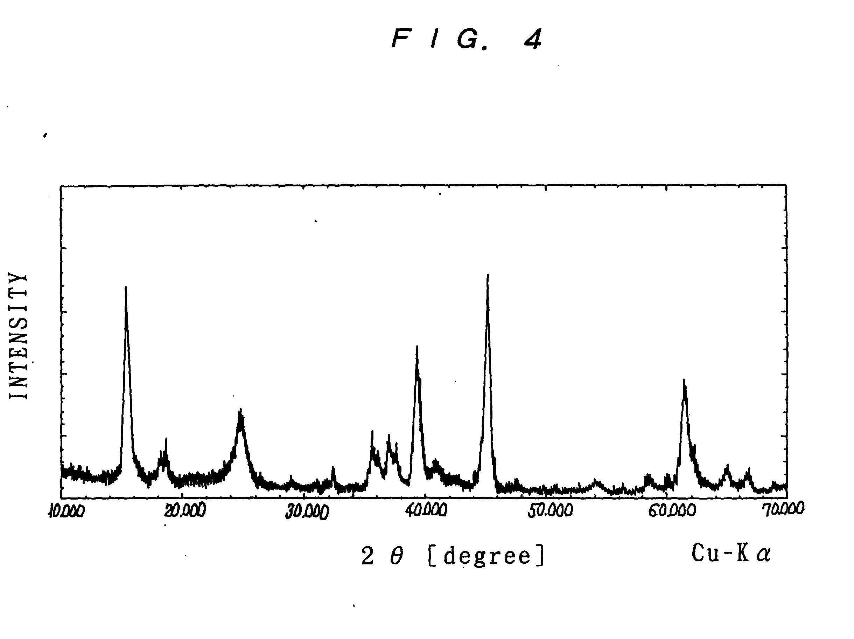

When producing LiMnO₂ by the conventional method in a solid-solid reaction system, a mixture of γ-MnOOH and LiOH must be heat-treated at 450°C for several hours in an atmosphere of nitrogen gas. In this method, the powder obtained is contaminated with oxide other than the orthorhombic LiMnO₂, as shown by the X-ray diffraction pattern in FIG. 4. It was confirmed that the electrochemical activity of the powder obtained was lower by about 10% in comparison with that in the embodiments of the present invention.

As mentioned above, by using the present invention, the process of producing a cathode material is simplified and the productivity of LiMnO₂ is improved because the reaction rate becomes higher.

In the above embodiments, γ-MnOOH was used as a solid to accept the substitution of alkali metal ions for protons. The same effect was obtained by using a hydroxide or an oxyhydroxide of Ni, Co or Fe, or hydroxide or the other oxyhydroxide of Mn instead of γ-MnOOH. Furthermore, a mixture or a solid solution of these compounds also caused the same effect.

As mentioned above, using the present invention, a composite oxide containing alkali metal ions is produced only by the step of supplying water vapor, including dispersed water mist containing the alkali metal ions on the surface of the hydroxide or the oxyhydroxide, thereby to substitute the alkali metal ions for the protons in the solid. The present invention can achieve a high reaction rate. No other steps are required after this step. Therefore, the process is simplified.

Thus, according to the present invention, an active material having a high quality can be produced efficiently.

## Claims

1. A method of producing a cathode active material for a non-aqueous electrolyte secondary battery, comprising the step of exposing a hydroxide or an oxyhydroxide of a 3d transition metal containing protons at a rate of 1 wt% or more to a saturated aqueous mist containing a hydroxide of an alkali metal dissolved therein to substitute the alkali metal ions contained in said aqueous mist for said protons contained in said hydroxide or said oxyhydroxide.

2. The method of producing a cathode active material for a non-aqueous electrolyte secondary battery in accordance with claim I, wherein said exposing step is performed under pressure.

3. The method of producing a cathode active material for a non-aqueous electrolyte secondary battery in accordance with claim 1 or 2, wherein said alkali metal ions are Li ions.

4. The method of producing a cathode active material for a non-aqueous electrolyte secondary battery in accordance with claim 1, 2 or 3, wherein said MnOOH is employed.

5. The method of producing a cathode active material for a non-aqueous electrolyte secondary battery in accordance with any preceding claim, wherein said water mist contains said alkali metal ions in an amount of more than 6 mol/L in the liquid phase.

6. A method of producing a cathode active material for a non-aqueous electrolyte secondary battery, comprising the steps of;
preparing a mixture of an alkali metal hydroxide and at least one compound selected from hydroxides and oxyhydroxides of 3d transition metals, said compound containing protons at a rate of 1 wt% or more and
exposing said mixture to a saturated aqueous mist, to dissolve said alkali metal hydroxide in said saturated aqueous mist and to substitute the alkali metal ions contained in said saturated aqueous mist for said protons contained in said compound.

7. The method of producing a cathode active material for a non-aqueous electrolyte secondary battery in accordance with claim 6, wherein said exposing step is performed under pressure.

8. The method of producing a cathode active material for a non-aqueous electrolyte secondary battery in accordance with claim 6 or 7, wherein said alkali metal ions are Li ions.

9. The method of producing a cathode active material for a non-aqueous electrolyte secondary battery in accordance with claim 6, 7 or 8, wherein said compound is MnOOH.

10. The method of producing a cathode active material for a non-aqueous electrolyte secondary battery in accordance with any one of claims 6-9, wherein said water mist contains said alkali metal ions in an amount of more than 6 mol/L in the liquid phase.

## Patentansprüche

1. Ein Verfahren zur Herstellung eines aktiven Materials für eine Kathode einer nicht-wässrigen Sekundärzelle, welches die Maßnahme umfaßt, ein Hydroxid oder ein Oxyhydroxid eines Übergangsmetalles der Gruppe der 3d-Übergangsmetalle, welches Protonen in einer Konzentration von 1 Gewichtsprozent oder mehr enthält, mit einem gesättigten Wassernebel in Berührung zu bringen, der ein Hydroxid eines Alkalimetalls gelöst enthält, und so die im besagten Hydroxid oder Oxyhydroxid enthaltenen Protonen durch die im besagten Wassernebel enthaltenen Alkalimetallionen zu ersetzen.

2. Das Verfahren zur Herstellung eines aktiven Materials für eine Kathode einer nicht-wässrigen Sekundärzelle nach Anspruch 1, in welchem die besagte Maßnahme unter Druck durchgeführt wird.

3. Das Verfahren zur Herstellung eines aktiven Materials für eine Kathode einer nicht-wässrigen Sekundärzelle nach Anspruch 1 oder 2, in welchem die besagten Alkalimetallionen Lithium-Ionen sind.

4. Das Verfahren zur Herstellung eines aktiven Materials für eine Kathode einer nicht-wässrigen Sekundärzelle nach Anspruch 1, 2 oder 3, in welchem MnOOH verwendet wird.

5. Das Verfahren zur Herstellung eines aktiven Materials für eine Kathode einer nicht-wässrigen Sekundärzelle nach irgendeinem der vorhergehenden Ansprüche, in welchem besagter Wassernebel die besagten Alkalimetallionen in einer Menge von mehr als 6 Mol/l in der flüssigen Phase enthält.

6. Ein Verfahren zur Herstellung eines aktiven Materials für eine Kathode einer nicht-wässrigen Sekundärzelle umfassend die folgenden Maßnahmen:
Herstellung einer Mischung aus einem Alkalimetallhydroxid und mindestens einer Verbindung, die ausgewählt ist aus der Gruppe der Hydroxide und Oxyhydroxide von 3d-Übergangsmetallen, welche gesagte Verbindung einen Gehalt an Protonen von 1 Gewichtsprozent oder mehr enthält und
in Berührungbringen besagter Mischung mit einem gesättigten Wassernebel unter Auflösung des besagten Alkalimetallhydroxids in besagtem gesättigten Wassernebel und Ersetzen der in besagter Verbindung enthaltenen Protonen durch die im besagten gesättigten Wassernebel enthaltenen Alkalimetallionen.

7. Das Verfahren zur Herstellung eines aktiven Materials für eine Kathode einer nicht-wässrigen Sekundärzelle gemäß Anspruch 6, in welchem das in Berührungbringen unter Druck durchgeführt wird.

8. Das Verfahren zur Herstellung eines aktiven Materials für eine Kathode einer nicht-wässrigen Sekundärzelle gemäß Anspruch 6 oder 7, in welchem besagte Alkalimetallionen Lithium-Ionen sind.

9. Das Verfahren zur Herstellung eines aktiven Materials für eine Kathode einer nicht-wässrigen Sekundärzelle gemäß Anspruch 6, 7 oder 8, in welchem besagte Verbindung MnOOH ist.

10. Das Verfahren zur Herstellung eines aktiven Materials für eine Kathode einer nicht-wässrigen Sekundärzelle gemäß irgendeinem der Ansprüche 6 bis 9, in welchem der besagte Wassernebel die Alkalimetallionen in einer Menge von mehr als 6 Mol/l in der wässrigen Phase enthält.

## Revendications

1. Procédé de production d'un matériau actif pour cathode destiné à une batterie d'accumulateur à électrolyte non-aqueux, comprenant l'étape consistant à exposer un hydroxyde ou un oxyhydroxyde d'un métal de transition du groupe 3d contenant des protons à un taux de 1 % en poids ou plus à une brumaille aqueuse saturée contenant un hydroxyde d'un métal alcalin dissout dans celle-ci pour substituer des ions métalliques alcalins contenus dans ladite brumaille aqueuse auxdits protons contenus dans ledit hydroxyde ou ledit oxyhydroxyde.

2. Procédé de production d'un matériau actif pour cathode destiné à une batterie d'accumulateur à électrolyte non-aqueux selon la revendication 1, dans lequel ladite étape d'exposition est effectuée sous pression.

3. Procédé de production d'un matériau actif pour cathode destiné à une batterie d'accumulateur à électrolyte non-aqueux selon la revendication 1 ou 2, dans lequel lesdits ions métalliques alcalins sont des ions de Li.

4. Procédé de production d'un matériau actif pour cathode destiné à une batterie d'accumulateur à électrolyte non-aqueux selon la revendication 1, 2 ou 3, dans lequel ledit MnOOH est employé.

5. Procédé de production d'un matériau actif pour cathode destiné à une batterie d'accumulateur à électrolyte non-aqueux selon l'une quelconque des revendications précédentes, dans lequel ladite brumaille d'eau contient des ions métalliques alcalins en une quantité supérieure à 6 mol/L en phase liquide.

6. Procédé de production d'un matériau actif pour cathode destiné à une batterie d'accumulateur à électrolyte non-aqueux comprenant les étapes consistant à :
préparer un mélange d'un hydroxyde métallique alcalin et d'au moins un composé choisi à partir des hydroxydes et des oxyhydroxydes des métaux de transition du groupe 3d, ledit composé contenant des protons à un taux de 1 % en poids ou plus et
exposer ledit mélange à une brumaille aqueuse saturée pour dissoudre ledit hydroxyde métallique alcalin dans ladite brumaille aqueuse saturée et pour substituer les ions métalliques alcalins contenus dans ladite brumaille aqueuse saturée auxdits protons contenus dans ledit composé.

7. Procédé de production d'un matériau actif pour cathode destiné à une batterie d'accumulateur à électrolyte non-aqueux selon la revendication 6, dans lequel ladite étape d'exposition est effectuée sous pression.

8. Procédé de production d'un matériau actif pour cathode destiné à une batterie d'accumulateur à électrolyte non-aqueux selon la revendication 6 ou 7, dans lequel lesdits ions métalliques alcalins sont des ions de Li.

9. Procédé de production d'un matériau actif pour cathode destiné à une batterie d'accumulateur à électrolyte non-aqueux selon la revendication 6, 7 ou 8, dans lequel ledit composé est MnOOH.

10. Procédé de production d'un matériau actif pour cathode destiné à une batterie d'accumulateur à électrolyte non-aqueux selon l'une quelconque des revendications 6 à 9, dans lequel ladite brumaille d'eau contient lesdits ions métalliques alcalins en une quantité supérieure à 6 mol/L en phase liquide.
